# FASCICULE DE BREVET EUROPEEN

(11) **EP 0 748 162 B1**
(45) Date de publication et mention de la délivrance du brevet: **08.03.2000**
(21) Numéro de dépôt: 95941157.0
(22) Date de dépôt: 29.11.1995
(51) Int. Cl.: A01N 65/00, A01N 57/12, A01N 37/36, A01N 31/04

(54) **COMPOSITION DESINFECTANTE OU ANTISEPTIQUE COMPRENANT AU MOINS UN ALCOOL TERPENIQUE ET AU MOINS UN TENSIO-ACTIF ACIDE BACTERICIDE, ET UTILISATION D'UN TEL MELANGE**
DESINFIZIERENDE ODER ANTISEPTISCHE ZUSAMMENSETZUNG, DIE ZUMINDEST EINEN TERPEN-ALKOHOL UND ZUMINDEST EINEN BAKTERIZIDEN, SAUREN, OBERFLÄCHENAKTIVEN WIRKSTOFF ENTHÄLT, SOWIE IHRE VERWENDUNG
DISINFECTING OR ANTISEPTIC COMPOSITION INCLUDING AT LEAST ONE TERPENE ALCOHOL AND AT LEAST ONE BACTERICIDAL ACIDIC SURFACTANT, AND USE THEREOF

(30) Priorité: 30.11.1994 FR 9414398
(43) Date de publication de la demande: 18.12.1996
(73) Titulaire: ACTION PIN, 40100 Dax (FR)
(72) Inventeur: BARRANX, Alain, F-40180 Oeyreluy (FR); BARSACO, Michel, F-40100 Dax (FR); DUFAU, Ghislain, F-40100 Dax (FR); LAUILHE, Jean-Paul, F-40990 Saint-Paul-les-Dax (FR)
(74) Mandataire: Obolensky, Michel
(86) Numéro de dépôt international: FR9501573
(87) Numéro de publication internationale: WO9616548

(56) Documents cités:
- EP-A- 0 288 689
- WO-A-89/01023
- CA-A- 1 153 267
- DD-A- 294 635
- DE-A- 4 225 626

## Description

La présente invention concerne une composition désinfectante ou antiseptique à base d'alcool terpénique et possédant une activité bactéricide large spectre, c'est-à-dire à la fois sur les bactéries gram-positif et gram-négatif.

Selon la présente invention, on s'intéresse aux propriétés bactéricides des alcools terpéniques, notamment ceux présents dans les huiles essentielles ou l'huile de pin.

Les huiles de pin sont constituées par des mélanges d'alcools et de carbures terpéniques. Dans ces mélanges, les proportions d'alcools et de carbures terpéniques peuvent être dans un rapport de 20/80 à 95/5, préférentiellement 50/50 à 95/5. Les alcools terpéniques sont essentiellement composés d'alcools terpéniques monocycliques (terpinéols, terpinène-1 ol-4 ...) et en plus faible proportion d'alcools terpéniques tricycliques (fenchol, bornéol ...).

L'huile de pin est connue et employée pour ses propriétés bactéricides dans des compositions désinfectantes, dans des compositions nettoyantes et désinfectantes, ainsi que dans des compositions antiseptiques. Cependant, l'activité bactéricide de telles compositions est limitée aux bactéries gram-négatif.

En effet, les alcools terpéniques, en particulier ceux de l'huile de pin, en solution, en microémulsion ou en dispersion aqueuse, ne sont pas efficaces sur les microorganismes gram-positif, tout du moins sous les formes disponibles jusqu'à présent.

Pour obtenir un désinfectant ou un antiseptique présentant un large spectre d'efficacité antibactérienne, il faut donc utiliser en combinaison avec l'huile de pin, un ou plusieurs composés présentant une activité bactéricide contre les microorganismes gram-positif.

De façon classique, ces matières actives bactéricides sont choisies parmi les ammoniums quaternaires, les dérivés phénoliques, les aldéhydes, etc. Ces composés présentent toutefois l'inconvénient majeur d'être trop dangereux à certaines concentrations et ne sont donc pas suffisamment inoffensifs vis-à-vis de l'utilisateur.

Pour préparer des compositions désinfectantes ou antiseptiques à large spectre d'efficacité n'utilisant pas de tels composés, il apparaît intéressant de rechercher d'autres associations avec les alcools terpéniques apportant les mêmes propriétés.

Les présents inventeurs ont découvert que l'association de certains tensio-actifs, ayant eux-mêmes des propriétés bactéricides contre les microorganismes gram-positif et gram-négatif, avec un alcool terpénique, permet d'atteindre ce but de façon remarquable.

La présente invention a donc pour objet une composition désinfectante ou antiseptique possédant une activité bactéricide à la fois sur les bactéries gram-positif et gram-négatif, ne contenant pas d'ammonium quaternaire, et comprenant (i) au moins un alcool terpénique, et (ii) au moins un tensio-actif acide bactéricide consistant en un acide alkyl polyéther carboxylique, un acide alcényl polyéther carboxylique, un acide alkylaryl polyéther carboxylique ou un ester phosphorique de surfactant non-ionique alcoxylé, sous forme acide ou partiellement neutralisée les composants (i) et (ii) étant présents en une proportion produisant un effet de synergie.

La présente invention fournit également des compositions nettoyantes désinfectantes à large spectre bactéricide comprenant les ingrédients mentionnés précédemment.

La composition selon l'invention peut comprendre avantageusement (i) un mélange d'alcools terpéniques, contenant notamment 30 à 100 % en poids d'alcools terpéniques monocycliques, de préférence 80 à 95 %. Elle peut comprendre en particulier un mélange contenant 70 à 100 % en poids de terpinéols, de préférence 80 à 90 %.

La composition peut également comprendre de façon avantageuse (i) un mélange comprenant au moins un alcool terpénique et au moins un carbure terpénique.

De préférence, les proportions pondérales d'alcool(s) terpénique(s) et de carbure(s) terpénique(s) sont dans un rapport de 20/80 à 95/5, notamment 50/50 à 95/5.

En ce cas, on peut utiliser comme mélange (i) de l'huile de pin. Cette dernière peut être d'origine naturelle ou de synthèse, obtenue par exemple par hydratation catalytique de l'α-pinène.

L'autre composant important de la composition selon l'invention est un tensio-actif acide bactéricide (ii).

Lorsque l'agent tensio-actif acide (ii) est de type acide alkyl-, alcényl-, ou alkylaryl- polyéther carboxylique, la chaîne polyéther est avantageusement de type polyoxyéthylène, polyoxypropylène ou polyéther mixte dérivé de l'oxyde d'éthylène et de l'oxyde de propylène.

En particulier, on préfère les tensio-actifs de formule (A)

R - [O -(CH₂ )ₘ]ₙ - O - CH₂ - COOH

dans laquelle R est choisi parmi un groupe alkyle en C₄-C₂₂, un groupe alcényle en C₁₈-C₂₂, et un groupe alkylaryle en C₆-C₂₂ pour la chaîne alkyle, m peut valoir 2 ou 3 et n est compris entre 1 et 20.

Des tensio-actifs de choix sont les acides polyoxyéthylène carboxyliques, c'est-à-dire les composés de formule (A) où m vaut 2.

Un groupe alkyle en C₄-C₂₂ peut être notamment un groupe butyle, héxyle, octyle, décyle, lauryle, tridécyle, palmityle, stéaryle, etc.

Un groupe alcényle en C₁₈-C₂₂ peut être notamment un groupe oléyle, linoléyle, etc.

Un groupe alkylaryle en C₆-C₂₂ pour la chaîne alkyle peut être notamment un groupe alkylphényle, en particulier un groupe octylphényle ou nonylphényle.

De tels agents tensio-actifs sont par exemple certains produits de marque AKYPO®, commercialisés par la Société CHEMY, certains produits de marque SANDOPAN®, commercialisés par la Société SANDOZ, certains produits de marque REWOPOL®, commercialisés par la Société WITCO, certains produits de marque MARLINAT®, commercialisés par la Société HÜLS, certains produits de marque EMPIGEN@, commercialisés par la Société ALBRIGHT & WILSON et certains produits de marque BETADET®, commercialisés par la Société KAO CORPORATION.

Lorsque l'agent tensio-actif acide bactéricide (ii) est de type ester phosphorique de surfactant non-ionique alcoxylé, le surfactant non-ionique peut être notamment un surfactant éthoxylé, propoxylé ou éthoxylépropoxylé. La chaîne de base hydrocarbonée du surfactant peut être de type alkyle ou alkyl aryle.

On peut mentionner, à titre d'illustration, les mono- ou di-esters phosphoriques, par exemple de formules respectives (B) et (C): 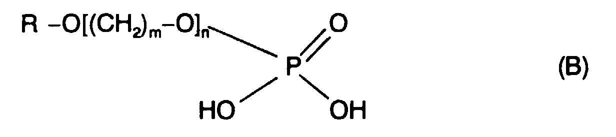 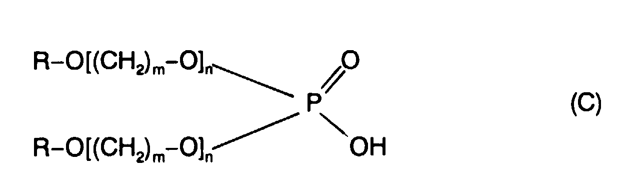 dans lesquelles R est un groupe alkyle en C₄-C₂₀, m vaut 2 ou 3 et n est compris entre 1 et 20.

Comme exemples d'esters phosphoriques, on peut citer certains produits de marque RHODAFAC®, commercialisés par la Société RHONE-POULENC.

Les tensio-actifs acides bactéricides utilisés peuvent être présents dans les compositions de l'invention exclusivement sous leur forme acide, ou sous forme partiellement neutralisée, c'est-à-dire sous forme de mélange tensio-actif acide/tensio-actif neutralisé.

Avantageusement, la composition se présente sous forme d'un concentré émulsionnable ou diluable, comprenant simplement les matières actives terpéniques et tensio-actives, ou d'une dispersion, ou d'une microémulsion ou d'une solution dans l'eau des matières actives. Une telle composition aqueuse peut être obtenue notamment par dispersion, microémulsion, ou dilution dans l'eau d'un concentré émulsionnable ou diluable de matières actives.

De préférence, la composition comprend (i) de 2 à 90 %, en particulier 5 à 90 %, en poids d'alcool(s) terpénique(s), seul(s) ou en mélange avec un (des) carbure(s) terpénique(s), et (ii) de 2 à 50 %, en particulier 5 à 50%, en poids de tensio-actif(s) acide(s) bactéricide(s), le reste étant éventuellement constitué (iii) d'eau dans le cas d'une dispersion, d'une microémulsion ou d'une solution aqueuse.

Une composition particulièrement préférée comprend (i) 5 à 20 % en poids d'au moins un desdits composés terpéniques, notamment d'huile de pin, (ii) 5 à 20 % en poids de tensio-actif(s) acide(s) bactéricide(s), l'eau représentant le complément.

Les tensio-actifs décrits ci-dessus sont utilisés dans la composition de la présente invention non seulement en raison de leur activité bactéricide mais également en vertu de leur rôle émulsifiant ou solubilisant vis-à-vis des composés terpéniques qui sont ordinairement insolubles dans l'eau.

En outre, on peut également utiliser en supplément (iv) au moins un tensio-actif non bactéricide pour parfaire la dispersion, la microémulsion ou la solubilisation des composés terpéniques dans l'eau.

De même, on réalise avantageusement une solution, une microémulsion ou une émulsion de composé(s) terpénique(s) dans l'eau additionnée de tensio-actif(s) acide(s) bactéricide(s), en ajoutant à ce mélange (v) au moins un co-solvant, notamment un co-solvant non bactéricide. Le co-solvant peut être avantageusement un alcool, notamment l'isopropanol ou l'éthanol, ou un éther de glycol.

Un co-solvant non bactéricide (v) ne joue dans la composition qu'un rôle d'adjuvant de solubilisation ou d'émulsification, mais il ne manifeste pas de propriétés bactéricides à la dose à laquelle il est amené par dilution de la composition désinfectante ou antiseptique à la dose d'efficacité de cette dernière.

De préférence, la quantité de co-solvant (v) représente 5 à 20 % du poids de la composition, plus particulièrement environ 10 % du poids de la composition.

Selon leurs teneurs en alcool terpénique et en tensio-actif acide bactéricide, les compositions désinfectantes ou antiseptiques seront efficaces contre les bactéries gram-négatif et gram-positif, à l'état pur ou à des doses d'utilisation faibles correspondant par exemple à une dilution de la composition à moins de 2 % en volume dans l'eau.

On note en particulier un effet de synergie inattendu entre l'huile de pin et les tensio-actifs de type acides polyéther carboxyliques ou esters phosphoriques de surfactants non-ioniques alcoxylés. En effet, la dose efficace d'une composition selon l'invention contenant une combinaison desdits ingrédients est sensiblement inférieure à la somme des quantités de chaque matière active, calculées sur la base de l'efficacité de chaque matière active prise isolément, nécessaires pour atteindre le même résultat.

Cet effet de synergie se manifeste à la fois pour l'activité contre les microorganismes gram-négatif et les microorganismes gram-positif.

La réduction de la dose de désinfectants ou d'antiseptiques offerte par la composition contenant une association synergique de matières actives bactéricides selon l'invention permet de réduire avantageusement les rejets de matières liés à l'utilisation de la composition, en particulier lorsqu'il s'agit de nettoyants-désinfectants.

L'invention a donc également pour objet l'utilisation d'un tensio-actif choisi parmi les acides alkyl polyéther carboxyliques, les acides alcényl polyéther carboxyliques, les acides alkylaryl polyéther carboxyliques et les esters phosphoriques de surfactants non-ioniques alcoxylés, en association avec au moins un alcool terpénique, éventuellement en mélange avec au moins un carbure terpénique, en tant que mélange bactéricide dans une composition désinfectante ou antiseptique possédant une activité bactéricide à la fois contre les bactéries gram-négatif et gram-positif, ladite composition étant exempte de composé d'ammonium quaternaire, et les composants (i) et (ii) étant présents en une proportion produisant un effet de synergie.

En outre, toutes les compositions à base d'alcools) terpénique(s), seul(s) ou en mélange avec un (des) carbure(s) terpénique(s), de la présente invention présentent l'avantage majeur de conserver leur efficacité bactéricide contre tous types d'organismes dans des conditions sévères d'utilisation. Ainsi, les compositions de l'invention restent efficaces lorsqu'elles sont utilisées en présence de substances interférentes, par exemple avec de l'eau dure ou pour nettoyer une surface souillée de matières organiques, notamment de protéines. Contrairement à l'usage avec des nettoyants désinfectants classiques, il n'est pas nécessaire d'augmenter la dose de matière active de manière importante pour obtenir une désinfection satisfaisante en milieux interférents.

Cette efficacité remarquable et surprenante, caractéristique des compositions selon la présente invention, va maintenant être mise en évidence dans les exemples suivants.

### Exemple 1

Une composition nettoyante est préparée à partir d'huile de pin et d'acide lauryl polyoxyéthylène carboxylique conformément à l'invention.

L'acide lauryl polyoxyéthylène carboxylique est un tensio-actif bactéricide actif contre les bactéries gram-négatif et gram-positif.

Son efficacité bactéricide peut être mesurée conformément à la norme AFNOR NFT 72-151.

Deux souches bactériennes sont choisies parmi les souches AFNOR comme étant représentatives des bactéries gram-positif et gram-négatif habituellement résistantes aux désinfectants.

Pour les bactéries gram-négatif, on choisit *Pseudomonas aeruginosa,* reconnu pour sa résistance dans les essais sur les désinfectants (souche CIP A22 - Institut Pasteur).

Pour les bactéries gram-positif, on choisit *Enterococcus hirae* pour les mêmes raisons (souche CIP 5855 - Institut Pasteur).

En vue de l'essai, ces souches sont entretenues selon la norme AFNOR NFT 72-140.

L'efficacité bactéricide du tensio-actif, exprimée par la concentration minimale de matière active dudit tensio-actif qui tue les bactéries au sens de l'essai AFNOR NFT 72-151, est reportée dans le tableau 1 suivant.

**TABLEAU 1**

| | Efficacité sur bactéries gram-*(Pseudomonas aeruginosa)* | Efficacité sur bactéries gram+ *(Enterococcus hirae)* |
|---|---|---|
| Concentration minimale d'acide lauryl polyoxyéthylène carboxylique (exprimé à 100 % de matière active) | 0,8 % (8000 ppm d'actif bactéricide) | 0,8 % (8000 ppm d'actif bactéricide) |

La formulation de la composition nettoyante est la suivante (les pourcentages étant exprimés en % en poids de matière active) :

| | |
|---|---|
| Acide lauryl polyoxyéthylène carboxylique | 20 % |
| Huile de pin | 20 % |
| Isopropanol | 10 % |
| Eau | 50 %. |

L'acide lauryl polyoxyéthylène carboxylique utilisé est un produit commercialisé sous la marque MARLINAT® CM 100 par la Société HÜLS. La formule de cet agent tensio-actif est :

R - (O - CH₂ - CH₂ )₁₀- O - CH₂ - COOH

où R est un groupe lauryle.

L'huile de pin utilisée est un produit commercialisé sous la marque DERTOL® 90 par la Société Les Dérivés Résiniques et Terpéniques, qui comprend un mélange d'alcools terpéniques et de carbures terpéniques dont la teneur en alcools terpéniques est comprise entre 88 et 93 %.

Les ingrédients sont mélangés jusqu'à obtention d'une microémulsion stable.

L'efficacité bactéricide de la composition de l'exemple 1 est également mesurée suivant la norme NFT 72-151.

Le résultat de l'essai est reporté dans le tableau 2 où l'efficacité de la composition est exprimée par la dilution maximale (en volume) de la composition dans l'eau distillée, qui permet de tuer les bactéries au sens de l'essai AFNOR NFT 72-151.

Dans chaque cas, on a porté dans le tableau la quantité d'actif bactéricide correspondant à cette dilution. Pour les essais sur bactéries gram-négatif, la quantité d'actif bactéricide correspond à la quantité totale d'huile de pin et de tensio-actif (qui présentent chacun une activité contre ce type de bactéries). Pour les essais sur bactéries gram-positif, seul le tensio-actif est pris en compte en tant qu'actif bactéricide, l'huile de pin seule ne présentant pas d'activité contre ce type de bactéries.

La composition est également soumise à un essai de détermination de l'efficacité bactéricide sur bactéries gram-négatif en présence d'eau dure (60° TH) et en présence de protéines suivant le protocole technique de la norme AFNOR NFT 72-171. Les résultats de cet essai figurent dans le tableau 3.

### Exemple comparatif 1a

Une composition ne contenant pas d'huile de pin mais qui contient autant de tensio-actif acide bactéricide (acide lauryl polyoxyéthylène carboxylique) que la composition de l'exemple 1, est préparée et soumise à l'essai AFNOR NFT 72-151 comme dans l'exemple 1.

La formulation est la suivante (les pourcentages étant exprimés en % en poids de matière active) :

| | |
|---|---|
| Acide lauryl polyoxyéthylène carboxylique | 20 % |
| Isopropanol | 10 % |
| Eau | 70 %. |

Les résultats de l'essai de détermination de l'efficacité bactéricide sont reportés dans le tableau 2.

### Exemple comparatif 1 b

Une composition ne contenant pas de tensio-actif acide bactéricide, mais qui contient autant d'huile de pin que la composition de l'exemple 1, est préparée et soumise à l'essai AFNOR NFT 72-151 comme dans l'exemple 1.

Pour réaliser l'émulsion, un tensio-actif est cependant nécessaire. On utilise un savon sodique d'acide gras du tall-oil qui ne présente pas de propriétés bactéricides.

La formulation est la suivante (les pourcentages étant exprimés en % en poids de matière active) :

| | |
|---|---|
| Huile de pin | 20 % |
| Savon sodique d'acide gras du tall-oil | 20 % |
| Isopropanol | 10 % |
| Eau | 50 %. |

Les résultats de l'essai de détermination de l'efficacité bactéricide sont présentés dans le tableau 2.

### Exemple 2

Une autre composition répondant à la formulation suivante est préparée à partir des ingrédients de la composition de l'exemple 1, et soumise à l'essai AFNOR NFT 72-151.

| | |
|---|---|
| Acide lauryl polyoxyéthylène carboxylique | 20 % |
| Huile de pin | 5 % |
| Isopropanol | 10 % |
| Eau | 65 %. |

Les résultats de l'essai de détermination de l'efficacité bactéricide sont présentés dans le tableau 2.

**TABLEAU 2**

| Composition | Efficacité sur bactéries gram- *(Pseudomonas aeruginosa)* | Efficacité sur bactéries gram+ *(Enterococcus hirae)* |
|---|---|---|
| Exemple 1 | 0,5 % 2000 ppm d'actif bactéricide total | 0,5 % 1000 ppm d'actif bactéricide |
| Exemple 2 | 1 % 2500 ppm d'actif bactéricide total | 1 % 2000 ppm d'actif bactéricide |
| Ex. comparatif 1a | 4 % 8000 ppm d'actif bactéricide | 4 % 8000 ppm d'actif bactéricide |
| Ex. comparatif 1b | 2 % 4000 ppm d'actif bactéricide | inactive pas d'actif bactéricide |

Les compositions des exemples 1 et 2 sont efficaces à des doses d'emploi faibles.

Les exemples comparatifs mettent en évidence l'effet de synergie entre l'huile de pin et le tensio-actif.

Ainsi, l'ajout d'huile de pin, inactive contre les bactéries gram-positif, au tensio-actif, permet de diminuer d'un facteur 8 la dose de tensio-actif bactéricide nécessaire à l'activité bactéricide contre les microorganismes gram-positif.

Par ailleurs, si les propriétés bactéricides de l'huile de pin et du tensio-actif étaient simplement additives, un mélange de 20 % de l'un et de l'autre d'après les exemples 1a et 1b, ne serait pas efficace sur les bactéries gram-négatif, à une dose inférieure à 6000 ppm d'actif bactéricide total. Or la composition de l'exemple 1 reste efficace jusqu'à une dose de 2000 ppm d'actif bactéricide total.

**TABLEAU 3**

| Composition de l'exemple 1 | Efficacité sur bactéries gram- *(Pseudomonas aeruginosa)* |
|---|---|
| Eau dure (60 ° TH) | 1 % |
| Protéines (albumine 1 % + extrait de levure 1 %) | 3 % |

La composition de l'exemple 1 est très efficace dans des conditions d'utilisation en milieux interférents.

### Exemple 3

Cet exemple concerne la détermination de l'efficacité bactéricide de tensio-actifs de type esters phosphoriques de surfactants non-ioniques éthoxylés.

Comme dans l'exemple 1, de tels tensio-actifs sont soumis à l'essai AFNOR NFT 72-151.

Deux exemples de ces tensio-actifs sont les suivants : RHODAFAC® RA-600, qui comprend un mélange de mono- et de di- ester phosphorique d'un alcool en C₈-C₁₀ éthoxylé avec 6 moles d'oxyde d'éthylène,
RHODAFAC® RE-610, qui comprend un mélange de mono- et de di-ester phosphorique de nonylphénol éthoxylé, produits commercialisés par la Société RHÔNE-POULENC.

Les résultats des essais de détermination de l'efficacité bactéricide sont présentés dans le tableau 4 suivant, exprimés comme dans le tableau 1 par la concentration minimale de matière active dudit tensio-actif qui tue les bactéries au sens de l'essai AFNOR NFT 72-151.

**TABLEAU 4**

| Concentrations minimales d'esters phosphoriques (exprimés à 100 % de matières actives) | Efficacité sur bactéries gram- *(Pseudomonas aeruginosa)* | Efficacité sur bactéries gram+ *(Enterococcus hirae)* |
|---|---|---|
| Matière active du RHODAFAC® RA 600 | 0,04 % (400 ppm) | 0,04 % (400 ppm) |
| Matière active du RHODAFAC® RE 610 | 0,2 % (2000 ppm) | 0,4 % (4000 ppm) |

Ces tensio-actifs peuvent être incorporés dans des compositions nettoyantes désinfectantes similaires à celles des exemples 1 et 2.

### Exemple 4

Une composition nettoyante-désinfectante est préparée à partir d'huile de pin (DERTOL® 90) et du mélange de mono- et di-ester phosphorique de nonyl phénol éthoxylé, RHODAFAC® RE-610.

La formulation de la composition nettoyante-désinfectante est la suivante (les pourcentages étant exprimés en % en poids de matière active) :

| | |
|---|---|
| RHODAFAC® RE-610 | 20 % |
| Huile de pin | 20 % |
| Isopropanol | 10 % |
| Eau | 50 %. |

Les ingrédients sont mélangés jusqu'à obtention d'une microémulsion stable.

L'efficacité bactéricide de cette composition est mesurée suivant la norme NFT 72-151, sur des bactéries gram-négatif.

Le résultat de l'essai est reporté dans le tableau 5 où l'efficacité de la composition est exprimée par la dilution maximale (en volume) de la composition dans l'eau distillée, qui permet de tuer les bactéries au sens de l'essai AFNOR NFT 72-151.

### Exemple comparatif 4a

Une composition ne contenant pas d'huile de pin mais qui contient autant de tensio-actif acide bactéricide que la composition de l'exemple 4, est préparée et soumise à l'essai AFNOR NFT 72-151 comme dans l'exemple 4.

La formulation est la suivante (les pourcentages étant exprimés en % en poids de matière active) :

| | |
|---|---|
| RHODAFAC® RE-610 | 20 % |
| Isopropanol | 10 % |
| Eau | 70 %. |

Les résultats de l'essai de détermination de l'efficacité bactéricide sont reportés dans le tableau 5, qui reprend également les résultats de l'exemple comparatif 1b, correspondant à une composition sans tensio-actif bactéricide.

**TABLEAU 5**

| Composition | Efficacité sur bactéries gram- *(Pseudomonas aeruginosa)* |
|---|---|
| Exemple 4 | 0,4 % 1600 ppm d'actif bactéricide total |
| Exemple comparatif 4a | 1 % 2000 ppm d'actif bactéricide |
| Exemple comparatif 1b | 2 % 4000 ppm d'actif bactéricide |

La composition de l'exemple 4 est également efficace à une dose d'emploi faible.

Les exemples comparatifs mettent en évidence l'effet de synergie entre l'huile de pin et le tensio-actif.

Ainsi, si les propriétés bactéricides de l'huile de pin et du tensio-actif étaient simplement additives, un mélange de 20 % de l'un et de l'autre d'après les exemples 4a et 1b, ne serait pas efficace sur les bactéries gram-négatif à une dose inférieure à 3000 ppm d'actif bactéricide total. Or la composition de l'exemple 4 reste efficace jusqu'à une dose de 1600 ppm d'actif bactéricide total.

## Revendications

1. Composition désinfectante ou antiseptique, et éventuellement nettoyante, possédant une activité bactéricide à la fois sur les bactéries gram-positif et gram-négatif, ne contenant pas d'ammonium quaternaire, et comprenant (i) au moins un alcool terpénique, et (ii) au moins un tensio-actif acide bactéricide, consistant en un acide alkyl polyéther carboxylique, un acide alcényl polyéther carboxylique, un acide alkylaryl polyéther carboxylique ou un ester phosphorique de surfactant non-ionique alcoxylé, sous forme acide ou partiellement neutralisée, les composants (i) et (ii) étant présents en une proportion produisant un effet de synergie.

2. Composition selon la revendication 1, comprenant (i) un mélange d'alcools terpéniques, contenant de 30 à 100 % en poids de d'alcools terpéniques monocycliques.

3. Composition selon l'une des revendications 1 ou 2, comprenant (i) un mélange d'au moins un alcool terpénique et au moins un carbure terpénique.

4. Composition selon la revendication 3, dans laquelle les proportions pondérales d'alcool(s) terpénique(s) et de carbure(s) terpénique(s) sont dans un rapport de 20/80 à 95/5.

5. Composition selon l'une des revendications 3 ou 4, dans laquelle le mélange (i) est de l'huile de pin.

6. Composition selon l'une quelconque des revendications précédentes, comprenant (ii) un agent tensio-actif de formule (A)
R -[O - (CH₂)ₘ]ₙ - O - CH₂ - COOH
dans laquelle R est choisi parmi un groupe alkyle en C₄-C₂₂, un groupe alcényle en C₁₈-C₂₂, un groupe alkylaryle en C₆-C₂₂ pour la chaîne alkyle, m vaut 2 ou 3, et n est compris entre 1 et 20.

7. Composition selon l'une quelconque des revendications précédentes, comprenant (ii) un agent tensio-actif choisi parmi les esters phosphoriques de surfactants non-ioniques éthoxylés, propoxylés ou éthoxylés-propoxylés.

8. Composition selon la revendication 7, dans laquelle la chaîne de base hydrocarbonée du tensio-actif (ii) est de type alkyle ou alkylaryle.

9. Composition selon l'une quelconque des revendications précédentes, comprenant (i) de 2 à 90 % en poids d'au moins un alcool terpénique, éventuellement en mélange avec au moins un carbure terpénique, et (ii) de 2 à 50 % en poids de tensio-actif acide bactéricide, le reste étant éventuellement constitué (iii) d'eau.

10. Composition selon la revendication 9, comprenant (i) 5 à 20 % en poids d'huile de pin, (ii) 5 à 20 % en poids de tensio-actif bactéricide, l'eau représentant le complément.

11. Composition selon l'une quelconque des revendications précédentes, comprenant en outre (iv) au moins un tensio-actif non bactéricide.

12. Composition selon l'une quelconque des revendications précédentes, comprenant en outre (v) un co-solvant non bactéricide.

13. Composition selon la revendication 12, dans laquelle le co-solvant (v) est un alcool, notamment l'isopropanol ou l'éthanol, ou un éther de glycol.

14. Composition selon la revendication 12 ou 13, dans laquelle le co-solvant (v) est présent à raison de 5 à 20 % en poids de la composition.

15. Utilisation d'un (i) tensio-actif choisi parmi les acides alkyl polyéther carboxyliques, les acides alcényl polyéther carboxyliques et les acides alkylaryl polyéther carboxyliques et les esters phosphoriques de surfactants non-ioniques alcoxylés, en association avec au moins (ii) un alcool terpénique, en tant que mélange bactéricide dans une composition désinfectante ou antiseptique possédant une activité bactéricide à la fois contre les bactéries gram-négatif et gram-positif, ladite composition étant exempte de composé d'ammonium quaternaire et les composants (i) et (ii) étant présents en une proportion produisant un effet de synergie.

## Claims

1. Disinfectant or antiseptic and optionally cleansing composition having a bactericidal effect on both gram-positive and gram-negative bacteria, containing no quaternary ammonium and comprising (i) at least one terpene alcohol and (ii) at least one bactericidal acid surfactant, consisting of an alkyl polyether carboxylic acid, an alkenyl polyether carboxylic acid, an alkylaryl polyether carboxylic acid or a phosphoric ester of alkoxylated non-ionic surfactant, in acid or partially neutralised form, components (i) and (ii) being present in a proportion which produces a synergistic effect.

2. Composition according to claim 1, comprising (i) a mixture of terpene alcohols containing 30 to 100% by weight of monocyclic terpene alcohols.

3. Composition according to one of claims 1 and 2, comprising (i) a mixture of at least one terpene alcohol and at least one terpene carbide.

4. Composition according to claim 3, wherein the proportions by weight of terpene alcohol(s) and terpene carbide(s) are in a ratio of 20:80 to 95:5.

5. Composition according to one of claims 3 and 4, wherein the mixture (i) is pine oil.

6. Composition according to any one of the preceding claims, comprising (ii) a surfactant agent of formula (A)
R -[O - (CH₂)ₘ]ₙ - O - CH₂ - COOH
wherein R is selected from a C₄₋₂₂-alkyl group, a C₁₈₋₂₂-alkenyl group, a C₆₋₂₂-alkylaryl group for the alkyl chain, m is equivalent to 2 or 3 and n is between 1 and 20.

7. Composition according to any one of the preceding claims, comprising (ii) a surfactant agent selected from the phosphoric esters of ethoxylated, propoxylated or ethoxylated-propoxylated non-ionic surfactants.

8. Composition according to claim 7, wherein the basic hydrocarbon chain of the surfactant (ii) is of the alkyl or alkylaryl type.

9. Composition according to any one of the preceding claims comprising (i) from 2 to 90% by weight of at least one terpene alcohol, optionally mixed with at least one terpene carbide, and (ii) from 2 to 50% by weight of bactericidal acid surfactant, the remainder optionally being made up of (iii) water.

10. Composition according to claim 9, comprising (i) 5 to 20% by weight of pine oil, (ii) 5 to 20% by weight of bactericidal surfactant, water constituting the remainder.

11. Composition according to any one of the preceding claims, further comprising (iv) at least one non-bactericidal surfactant.

12. Composition according to any one of the preceding claims, further comprising (v) a non-bactericidal co-solvent.

13. Composition according to claim 12, wherein the co-solvent (v) is an alcohol, particularly isopropanol or ethanol, or a glycol ether.

14. Composition according to claim 12 or 13, wherein the co-solvent (v) is present in an amount of from 5 to 20% by weight of the composition.

15. Use of a (i) surfactant selected from among the alkyl polyether carboxylic acids, the alkenyl polyether carboxylic acids and the alkylaryl polyether carboxylic acids and the phosphoric esters of alkoxylated non-ionic surfactants, in conjunction with at least (ii) one terpene alcohol, as a bactericidal mixture in a disinfectant or antiseptic composition having a bactericidal effect against both gram-negative and gram-positive bacteria, said composition being free from quaternary ammonium compounds and the components (i) and (ii) being present in proportions which produce a synergistic effect.

## Patentansprüche

1. Desinfizierende oder antiseptische und gegebenenfalls reinigende Zusammensetzung mit einer bakteriziden Wirkung sowohl gegenüber gram-positiven als auch gram-negativen Bakterien, die kein quaternäres Ammonium enthält und (i) mindestens einen Terpenalkohol und (ii) mindestens ein saures bakterizides oberflächenaktives Mittel bestehend aus einer Alkylpolyethercarbonsäure, einer Alkenylpolyethercarbonsäure, einer Alkylarylpolyethercarbonsäure oder einem Phosphorester eines nichtionischen alkoxylierten oberflächenaktiven Mittels in Form der Säure oder in teilweise neutralisierter Form enthält, wobei die Bestandteile (i) und (ii) in einem eine synergistische Wirkung ergebenden Verhältnis vorhanden sind.

2. Zusammensetzung nach Anspruch 1, enthaltend (i) eine Mischung von Terpenalkoholen, die 30 bis 100 Gew.-% monocyclischer Terpenalkohole enthält.

3. Zusammensetzung nach einem der Ansprüche 1 oder 2, enthaltend (i) eine Mischung aus mindestens einem Terpenalkohol und mindestens einem Terpenkohlenwasserstoff.

4. Zusammensetzung nach Anspruch 3, worin die Gewichtsverhältnisse von Terpenalkohol(en) zu Terpenkohlenwasserstoff(en) einem Verhältnis von 20/80 bis 95/5 entsprechen.

5. Zusammensetzung nach einem der Ansprüche 3 oder 4, worin die Mischung (i) Pine Oil ist.

6. Zusammensetzung nach einem der vorhergehenden Ansprüche, enthaltend (ii) ein oberflächenaktives Mittel der Formel (a)
R - [O - (CH₂)ₘ]ₙ- O - CH₂ - COOH
in der R aus C₄-C₂₂-Alkylgruppen, C₁₈-C₂₂-Alkenylgruppen, Alkylarylgruppen mit C₆-C₂₂-Alkylketten ausgewählt ist, m 2 oder 3 bedeutet und n zwischen 1 und 20 liegt.

7. Zusammensetzung nach irgendeinem der vorhergehenden Ansprüche, enthaltend (ii) ein oberflächenaktives Mittel ausgewählt aus Phosphorestern von nichtionischen, ethoxylierten, propoxylierten oder ethoxylierten/propoxylierten oberflächenaktiven Mitteln.

8. Zusammensetzung nach Anspruch 7, worin die Kohlenwasserstoff-Grundkette des oberflächenaktiven Mittels (ii) vom Alkyl-Typ oder vom Alkylaryl-Typ ist.

9. Zusammensetzung nach einem der vorhergehenden Ansprüche, enthaltend (i) 2 bis 90 Gew.-% mindestens eines Terpenalkohols, gegebenenfalls in Mischung mit mindestens einem Terpenkohlenwasserstoff, und (ii) 2 bis 50 Gew.-% des sauren, bakteriziden oberflächenaktiven Mittels, wobei der Rest gegebenenfalls durch (iii) Wasser gebildet wird.

10. Zusammensetzung nach Anspruch 9, enthaltend (i) 5 bis 20 Gew.-% Pine Oil, (11) 5 bis 20 Gew.-% bakterizides oberflächenaktives Mittel und Wasser als Rest.

11. Zusammensetzung nach irgendeinem der vorhergehenden Ansprüche, enthaltend zusätzlich (iv) mindestens ein nichtbakterizides oberflächenaktives Mittel.

12. Zusammensetzung nach irgendeinem der vorhergehenden Ansprüche, enthaltend zusätzlich (v) ein nichtbakterizides Co-Lösungsmittel.

13. Zusammensetzung nach Anspruch 12, worin das Co-Lösungsmittel (v) ein Alkohol, insbesondere Isopropanol oder Ethanol, oder ein Glykolether ist.

14. Zusammensetzung nach Anspruch 12 oder 13, worin das Co-Lösungsmittel (v) in einer Menge von 5 bis 20 Gew.-%, bezogen auf die Zusammensetzung, vorhanden ist.

15. Verwendung eines (i) oberflächenaktiven Mittels ausgewählt aus Alkylpolyethercarbonsäuren, Alkenylpolyethercarbonsäuren und Alkylarylpolyethercarbonsäuren und Phosphorestern von nichtionischen alkoxylierten oberflächenaktiven Mitteln in Kombination mit mindestens (ii) einem Terpenalkohol, als bakterizide Mischung in einer desinfizierenden oder antiseptischen Zusammensetzung mit einer bakteriziden Wirkung zugleich gegen gram-negative als auch gram-positive Bakterien, wobei die Zusammensetzung frei von quaternären Ammoniumverbindungen ist und die Bestandteile (i) und (ii) in einem eine synergistische Wirkung ergebenden Verhältnis vorhanden sind.
